# EUROPÄISCHE PATENTSCHRIFT

(11) **EP 1 497 007 B1**
(45) Veröffentlichungstag und Bekanntmachung des Hinweises auf die Patenterteilung: **20.09.2006**
(21) Anmeldenummer: 03727206.9
(22) Anmeldetag: 17.04.2003
(51) Int. Cl.: B01D 1/06

(54) **FALLROHRVERDAMPFER, SOWIE EINLAUFVORRICHTUNG HIERFÜR**
DOWNPIPE EVAPORATOR AND INLET DEVICE THEREFOR
EVAPORATEUR DE TUYAU DE DESCENTE ET DISPOSITIF D'ADMISSION ASSOCIE

(30) Priorität: 19.04.2002 DE 10217605
(43) Veröffentlichungstag der Anmeldung: 19.01.2005
(73) Patentinhaber: WME Gesellschaft für Windkraftbetriebene Meerwasse Rentsalzung mbH, 18556 Dranske/Rügen (DE)
(72) Erfinder: PLANTIKOW, Ulrich, 81373 München (DE)
(74) Vertreter: Kuhnen & Wacker
(86) Internationale Anmeldenummer: PCT/DE2003/001307
(87) Internationale Veröffentlichungsnummer: WO 2003/089105

(56) Entgegenhaltungen:
- DE-A- 3 119 059
- DE-C- 69 707
- DE-C- 861 991
- US-A- 3 087 533
- US-A- 3 406 716
- US-A- 4 747 915

## Beschreibung

Die Erfindung betrifft einen Fallrohrverdampfer gemäß dem Oberbegriff des Anspruches 1 sowie eine Einlaufvorrichtung gemäß dem Oberbegriff des Anspruches 7.

Fallrohrverdampfer bzw. Fallfilmverdampfer werden eingesetzt, um Stoffe einzudampfen, was insbesondere in der chemischen Industrie bei einer Vielzahl von Prozessen notwendig ist. Bei gebräuchlichen Fallrohrverdampferanlagen handelt es sich zumeist um senkrecht stehende Rohrbündelapparate, die in der Regel mit kondensierendem Dampf im Mantelraum beheizt werden. Die zu verdampfende Flüssigkeit wird am oberen Rohrende in die Verdampferrohre abgegeben und fließt unter dem Einfluß der Schwerkraft an der Innenseite als dünner Flüssigkeitsfilm herab. Die Flüssigkeit erwärmt sich dabei an den Innenumfangsflächen der Verdampferrohre und verdampft teilweise. Zur Einsparung von Heizenergie kann eine Verdampferanlage mehrstufig aufgebaut sein, wobei der entstehende Dampf einer Stufe zum Beheizen einer anderen Stufe benutzt wird. Ferner sind derartige Fallrohrverdampfer für den Gleich- oder Gegenstrombetrieb bekannt. Im Gleichstrombetrieb fließen bzw. strömen die zu verdampfende Flüssigkeit bzw. der gewonnene Dampf in dieselbe Richtung. Im Gegenstrombetrieb verlaufen die Bewegungsrichtungen gegeneinander.

Ihren Einsatz finden Fallrohrverdampfer vor allem bei einer schonenden Destillation und der Verdampfung thermisch empfindlicher Substanzen. Minimaler Druckverlust, geringe Flüssigkeitsverweilzeit und kleiner Flüssigkeitsinhalt sind die Hauptmerkmale und Vorteile der Fallrohrverdampfer. Außerdem zeichnen sich Fallrohrverdampfer prinzipiell durch eine geringe Temperaturdifferenz zwischen Heizdampf und Flüssigkeit u. a. aufgrund der dünnwandigen Verdampferrohre und der großen Fallfilmoberfläche aus.

Bei Fallrohrverdampfern ist die Ausbildung des Fallfilms am oberen Rohrende das für die Festlegung des auf den Rohrumfang bezogenen einzuleitenden Flüssigkeitsstroms maßgebende Kriterium. Hier hat sich ein zusammenhängender Fallfilm auszubilden, der bis zum Austritt am unteren Rohrende erhalten bleiben soll, um zu verhindern, daß sich trockene Stellen und dadurch begünstigt Ablagerungen ausbilden. Ferner wird angestrebt, daß jedes Verdampferrohr mit ungefähr der gleichen Flüssigkeitsmenge beaufschlagt wird, um einen hohen Wirkungsgrad des Fallrohrverdampfers zu erzielen.

Um einen sich möglichst schnell und möglichst dünn ausbildenden, zusammenhängenden Fallfilm der zu verdampfenden Flüssigkeit zu erzeugen, der das Verdampferrohr bis zu seinem unteren Ende an seiner Innenumfangsfläche lückenlos bedeckt, bedient man sich einer Einlaufvorrichtung. Hierfür sind Vorrichtungen wie Brausen, Düsen, Lochplatten oder Auffangwannen mit an geeigneten Stellen angebrachten Löchern bekannt, durch welche die zu verdampfende Flüssigkeit in das Rohrinnere gelangt. Zudem ist die Möglichkeit bekannt, die Verdampferrohre durch einen oberen Rohrboden hindurch darüber hinaus ragen zu lassen oder zu verlängern, und mit Löchern im überstehenden Rohrstück bzw. der Verlängerung zu versehen, durch welche die Flüssigkeit einströmen kann. Ebenso ist es möglich, die Verdampferrohre mittels Überlauf über die Rohrenden bzw. über die Enden der Rohrverlängerungen, die wehrkronenartig verformt oder mit beispielsweise keilförmigen Schlitzen versehen sein können, zu beschicken.

Diese bekannten Einlaufvorrichtungen weisen verschiedene Nachteile auf. Bei Brausen und Düsen und in gewissem Maße auch bei Lochplatten besteht wegen kleiner Öffnungsquerschnitte die Gefahr von Querschnittsverengungen bzw. Verstopfungen durch Ablagerungen oder Ausfällungen mit der Folge einer ungleichmäßigen Verteilung der Flüssigkeit auf die verschiedenen Verdampferrohre.

Bei einer Beschickung durch Überströmen ist eine gleichmäßige Verteilung der Flüssigkeit auf die Verdampferrohre nur dann möglich, wenn die Überlaufstellen aller Verdampferrohre exakt in einer waagrechten Ebene liegen. Außerdem sollte die zulaufende Flüssigkeit eine glatte Oberfläche aufweisen. Die Einhaltung dieser Bedingungen ist in der Praxis nicht möglich und nur mit unverhältnismäßig großem Aufwand näherungsweise realisierbar.

Bei einer Beschickung der Verdampferrohre durch Löcher im überstehenden Rohrstück bzw. in der Rohrverlängerung, welche von der Flüssigkeit umströmt sind, ist auf einfache Weise eine bessere und gleichmäßige Verteilung möglich. Variiert z. B. die Höhe der Löcher in einem Bereich von 1 cm, dann variiert der in die einzelnen Verdampferrohre einlaufende Flüssigkeitsstrom bei einer durchschnittlich 20 cm hohen Flüssigkeitsschicht über den Löchern nur im Bereich von 5 %, während bei einer Beschickung durch Überströmen die Verdampferrohre mit den höher gelegenen Rohrenden unter diesen Umständen überhaupt nicht beaufschlagt würden. Eine derartige Beschickung hat aber den Nachteil, daß die durch die Löcher einströmende Flüssigkeit unter der Wirkung des hydrostatischen Druckes der überstehenden Flüssigkeit im Bogen auf die dem Loch gegenüberliegende Rohrinnenwand geleitet wird. Dadurch wird die schnelle Ausbildung eines zusammenhängenden Fallfilms behindert, da die Flüssigkeit beim Aufprallen auf die Rohrwand in verschiedene Richtungen von der Auftreffstelle weg prallt. Dies führt zu Unbeständigkeiten bei der Filmausbildung und schließlich zu Verwirbelungen innerhalb der einströmenden Flüssigkeit, insbesondere bei gleichzeitigem Dampfstrom im Rohr nach oben, was die gewünschte Ausbildung eines zusammenhängenden Fallfilms be- oder sogar verhindert. Durch aufwendige Einbauten oder Einhängekörper können die Auswirkungen dieses Nachteils zwar reduziert, aber nicht völlig beseitigt werden.

Aus der US 3,406,716, der DE 31 19 059 A1, der US 3,087,533 und der US 4,747,915 sind jeweils Fallrohr-Verdampfer gemäß dem Oberbegriff des Anspruches 1 sowie Einlaufvorrichtungen nach dem Oberbegriff des Anspruches 7 bekannt geworden.

Es ist Aufgabe der Erfindung, einen Fallrohrverdampfer derart weiterzubilden, daß sich eine schnellere und zuverlässigere Ausbildung eines zusammenhängenden, die Rohrinnenwand eines Verdampferrohrs vollständig bedeckenden Fallfilms erzielen läßt.

Diese Aufgabe wird durch einen Fallrohrverdampfer mit den Merkmalen des Anspruches 1 gelöst.

Der erfindungsgemäße Fallrohrverdampfer zeichnet sich somit dadurch aus, daß die wenigstens eine Eintrittsöffnung eine derartige Haupteinströmrichtung der Flüssigkeit in das Rohrinnere herstellt, daß der Hauptauftreffwinkel der eingeleiteten Flüssigkeit weniger als 45° zur Tangentialebene der mittleren Aufschlagstelle der Flüssigkeit auf die innere Umfangsfläche des jeweiligen Verdampferrohrs beträgt. Auf diese Weise wird ein ungerichtetes Abprallen der Flüssigkeit von der Rohrinnenwand im wesentlichen vermieden, so daß ein rasches Anlegen der Flüssigkeit an die innere Umfangsfläche des Rohres erzielt werden kann. Daher bildet sich der Flüssigkeitsfilm erfindungsgemäß bereits beim Einströmen der Flüssigkeit in das Verdampferrohr zusammenhängend aus und das Verdampferrohr wird zuverlässiger bis zum unteren Rohrende vollständig benetzt - dies gilt auch für den Fall, daß gleichzeitig im Düseneinströmbereich im Rohrinneren ein nach oben gerichteter Dampfstrom vorliegt. Mit anderen Worten wird durch das Auftreffen der eingeleiteten Flüssigkeit auf die Rohrinnenwand unter einem kleinen, von der Tangentialebene abweichenden Winkel, so daß die Strömungsrichtung der auf die Rohrinnenwand auftreffenden Flüssigkeit eine ausgeprägte horizontale Komponente aufweist, somit erfindungsgemäß die schnelle Ausbildung eines die Rohrinnenwand unterhalb der Einströmstellen vollständig bedeckenden Fallfilms wirksam unterstützt. Ferner kann durch den erfindungsgemäßen Fallrohrverdampfer erstmals die Ausbildung eines Fallfilms der zu verdampfenden Flüssigkeit in geeigneter und exakt einstellbarer Dicke sichergestellt werden, da die Flüssigkeit unter genauer definierten Bedingungen in das Verdampferrohr eingebracht wird, als dies im Stand der Technik der Fall ist. Der erfindungsgemäße Fallrohrverdampfer zeichnet sich somit durch besonders hohe Prozeßsicherheit und Zuverlässigkeit aus.

Ferner ist die Einlaufvorrichtung als in das zugeordnete Verdampferrohr einfügbares Rohrstück mit wenigstens einer als Eintrittsöffnung dienenden, wendelförmigen Einbuchtung am Außenumfang ausgebildet sein. Jede wendelförmige Einbuchtung bildet mit der Innenumfangswand des Verdampferrohrs einen Kanal und führt die einzubringende Flüssigkeit so bereits lange vor der eigentlichen Eintrittsöffnung bzw. "bündelt" diese auf dem Weg ins Rohrinnere. Hierdurch sorgt sie also für eine exakte Führung der einströmenden Flüssigkeit in das Verdampferrohr und damit für eine Ausbildung eines geeigneten Fallfilms unter eindeutig definierten Bedingungen. Durch die wendelförmige Einbuchtung wird ferner sichergestellt, daß die wesentlichen Anteile des Strahls der einströmende Flüssigkeit unter einem gewünschten, im wesentlichen tangentialen Hauptauftreffwinkel auf die innere Rohrumfangsfläche auftreffen. Ein weiterer Vorteil besteht darin, daß bestehende Fallrohrverdampfer mit einer erfindungsgemäßen Hülse als Einlaufvorrichtung nachgerüstet werden können.

Vorteilhafte Weiterbildungen des erfindungsgemäßen Fallrohrverdampfers sind Gegenstand der abhängigen Ansprüche 2 bis 6.

So kann der Fallrohrverdampfer derart ausgestaltet sein, daß die mittels der Eintrittsöffnung hergestellte Haupteinströmrichtung im wesentlichen tangential zum Umfang des Rohrinneren ist. Damit ist noch zuverlässiger sichergestellt, daß sich der Flüssigkeitsfilm bereits beim Einströmen der Flüssigkeit in das Verdampferrohr zusammenhängend ausbildet, da ein Abprallen der Flüssigkeit weitestgehend vermieden wird. Die Ausbildung eines gleichmäßig dicken, das Verdampferrohr bis an sein unteres Ende vollständig bedeckenden Filmes ist somit besonders zuverlässig möglich. Zudem wird durch die möglichst exakte tangentiale Einströmung der Flüssigkeit eine Zerstäubung der Flüssigkeit im beispielsweise nach oben gerichteten Dampfstrom zuverlässig vermieden, was ebenfalls vorteilhaft im Hinblick auf einen möglichst zusammenhängenden Flüssigkeitsfilm ist.

Wenn die zu verdampfende Flüssigkeit den Verdampferrohren unter Ausnutzung der Hydrostatik zugeführt wird, kann eine im wesentlichen gleichmäßige Beschickung aller Verdampferrohre erreicht und somit ein schnelles Ausbilden eines gleichmäßig dicken, das gesamte Rohr an seiner inneren Umfangsfläche benetzenden Fallfilms erzielt werden. Insbesondere wird erreicht, daß die Flüssigkeit stets mit derselben Geschwindigkeit und gleichbleibendem Druck in das Rohrinnere einströmt. Auf dieses Weise ist es möglich, auch eine größere Anzahl von Verdampferrohren jeweils mit im wesentlichen gleicher Flüssigkeitsmenge und unter den gleichen Bedingungen zu beschicken.

Ferner kann die zu verdampfende Flüssigkeit mehreren Verdampferrohren über separate Leitungen zugeführt werden. Bei diesen Leitungen handelt es sich beispielsweise um Rohre oder Schläuche aus geeigneten Kunststoffen. Sie münden in eine oder mehrere Sammelleitungen, die z. B. von einer Pumpe mit der zu verdampfenden Flüssigkeit versorgt werden. Die Flüssigkeit kann aber auch aus einem Vorratsbehälter aufgrund der Schwerkraft hydrostatisch zugeführt werden. Auf diese Weise ist es möglich, eine gleichbleibende Beschickung auch von mehreren Verdampferrohren zu erzielen, wobei der Flüssigkeitsbehälter auch räumlich von dem Fallrohrverdampfer entfernt vorliegen kann. Eine derartige Beschickung der Verdampferrohre ist insbesondere dann von Vorteil, wenn der Fallfilmverdampfer wie z. B. auf einem fahrenden Schiff bewegt wird.

Ist der Fallrohrverdampfer mit einer oben offenen Einlaufvorrichtung ausgestattet, so ist dies insofern von Vorteil, als es die Verwendung des Fallrohrverdampfers im Gegenstrombetrieb erlaubt.

Alternativ kann der Fallrohrverdampfer mit einer oben geschlossenen Einlaufvorrichtung ausgestattet sein. Dies erlaubt eine sichere Beschickung des Rohres durch die vorgesehene Eintrittsöffnung bzw. -öffnungen auch dann, wenn das obere Rohrende überflutet sein sollte. Der gewonnene Dampf wird in diesem Fall auf geeignete Weise im Gleichstrombetrieb abgesaugt (entfernt).

Gemäß einem weiteren Aspekt der Erfindung wird eine Einlaufvorrichtung nach Anspruch 7 bereitgestellt. Damit kann ein bestehender Fallrohrverdampfer nachträglich mit einer erfindungsgemäßen Einlaufvorrichtung ausgestattet werden. Ferner kann eine bestehende Einlaufvorrichtung auch ausgetauscht werden, wenn dies aufgrund von Verschleiß, veränderten Einsatzbedingungen oder dgl. erforderlich erscheint.

Die Einlaufvorrichtung gemäß Anspruch 7 kann ferner mit wenigstens einem der Merkmale der Ansprüche 2 bis 6 weitergebildet werden, wobei sich analog die oben erläuterten Vorteile ergeben.

Die Erfindung wird nachfolgend in Ausführungsbeispielen anhand der Figuren der Zeichnung im näheren Detail erläutert. Es zeigt:
- Fig.1: einen Schnitt durch einen Fallrohrverdampfer mit einer Einlaufvorrichtung gemäß einer Ausführungsform, welche nicht in allen Details der Erfindung entspricht;
- Fig. 2: eine geschnittene Draufsicht in der Ebene A-A in Fig. 1;
- Fig. 3: eine geschnittene Draufsicht analog der in Fig. 2 gezeigten Darstellung in einer weiteren, nicht der Erfindung entsprechenden Ausführungsform einer Einlaufvorrichtung;
- Fig.4: eine Draufsicht auf eine Anordnung von mehreren, nicht erfindungsgemäßen Einlaufvorrichtungen;
- Fig. 5: ein im Schnitt gehaltenes Detail eines Fallrohrverdampfers mit einer Einlaufvorrichtung gemäß einer erfindungsgemäßen Ausführungsform;
- Fig.6: eine schematische Draufsicht auf mehrere Einlaufvorrichtungen mit ihrem Einspeiseweg gemäß einer weiteren Ausführungsform.

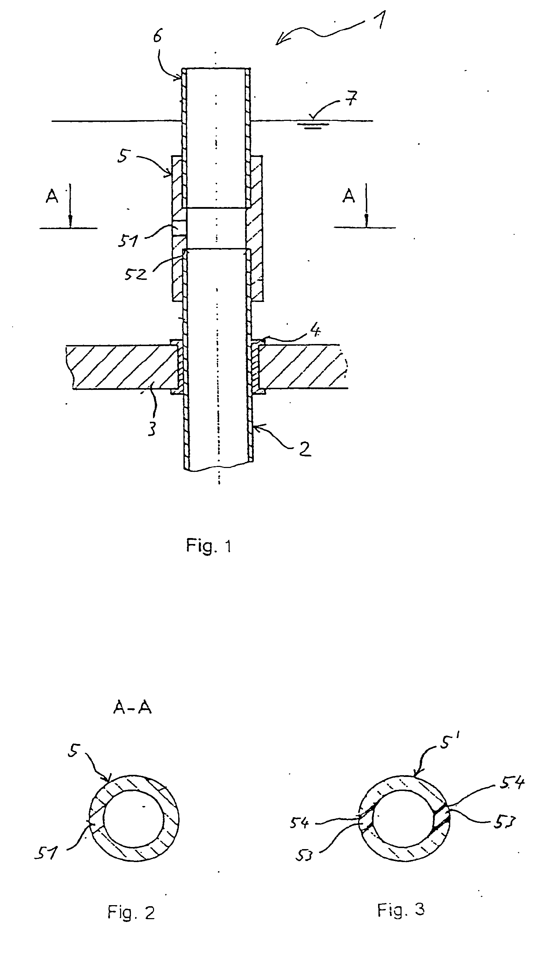

Fig. 1 zeigt einen Schnitt durch ein Fallrohr eines Fallrohrverdampfers 1 in einer ersten Ausführungsform. Dieses weist ein Verdampferrohr 2 auf, welches zylinderförmig ausgebildet und durch einen oberen Rohrboden 3 hindurch geführt ist. Zwischen dem Verdampferrohr 2 und dem oberen Rohrboden 3 ist eine Dichtung 4 angeordnet, mittels welcher die beidseits des Rohrbodens 3 vorliegenden Räume gegeneinander abgedichtet sind, wobei die zu verdampfende Flüssigkeit oberhalb des Rohrbodens 3 vorliegt und die Verdampferrohre 2 im Bereich unterhalb des Rohrbodens 3 beheizt werden. Auf das obere Ende des Verdampferrohres 2 ist eine hülsenförmige, nicht der Erfindung entsprechende Einlaufvorrichtung 5 aufgesteckt, welche eine Eintrittsöffnung 51 für die zu verdampfenden Flüssigkeit aufweist. In das obere Ende der Einlaufvorrichtung 5 ist ein weiteres Rohr 6 eingefügt, welches über einen Flüssigkeitsspiegel 7 nach oben hinausragt. Die Einlaufvorrichtung 5 ist bis zu einem Anschlag 52 auf das Verdampferrohr 2 angebracht, wobei der kleinere Innendurchmesser der Einlaufvorrichtung 5 und der Innendurchmesser des Verdampferrohrs 2 im wesentlichen gleich sind, so daß der Flüssigkeitsfilm an der Verbindungsstelle dieser Teile nicht beeinträchtigt bzw. unterbrochen wird. Ebenso ist das Rohr 6 bis zu einem Anschlag in die Einlaufvorrichtung 5 angebracht.

In Fig. 2 ist die Einlaufvorrichtung 5 im Querschnitt dargestellt. Damit die Flüssigkeit tangential oder nahezu tangential durch die Eintrittsöffnung 51 in das Rohrinnere einströmt, entspricht die Wandstärke der Hülse im Bereich der Eintrittsöffnung 51 im wesentlichen dem Durchmesser der Eintrittsöffnung 51.

In Fig. 3 ist eine abgewandelte, ebenfalls nicht der Erfindung entsprechende Einlaufvorrichtung 5' dargestellt. Diese weist zwei Eintrittsöffnungen 53 auf, welche Einsatzstücke 54 aus PTFE aufweisen und derart ausgebildet sind, daß die durch sie eingeleitete Flüssigkeit von beiden Eintrittsöffnungen 53 im gleichen Drehsinn tangential an die innere Rohrumfangsfläche der Einlaufvorrichtung 5' bzw. des Verdampferrohrs 2 auftreffen. Da die in der Flüssigkeit suspendierten Feststoffteilchen an PTFE besonders schlecht haften, ist die Gefahr einer Querschnittsverengung und Verstopfung durch Anlagerung derartiger Teilchen somit erheblich reduziert. Dies ist auch von Vorteil, wenn Lösungen durch den Verdampfungsprozeß so stark aufkonzentriert sind, daß es zu Ausfällungen kommen kann.

Treibende Kraft für die durch die Eintrittsöffnungen 51 bzw. 53 einströmende Flüssigkeitsmenge ist das Eigengewicht der bis zum Flüssigkeitsspiegel 7 über den Eintrittsöffnungen anstehenden Flüssigkeit. Bei ausreichender Höhe des Flüssigkeitsspiegels 7 werden verschiedene, zu einem Fallrohrverdampfer 1 gehörende Verdampferrohre 2 auch dann mit etwa dem gleichen Flüssigkeitsstrom beschickt, wenn sich die Eintrittsöffnung 51 bzw. 53 der Einlaufvorrichtung 5 bzw. 5' nicht exakt auf gleicher Höhe befinden. Bei Ausnutzung des hydrostatischen Druckes werden die Größe der Einströmquerschnitte und die Höhe der über dem oberen Rohrboden anstehenden Flüssigkeit so festgelegt, daß unter der Berücksichtigung von Zähigkeit, Oberflächenspannung und spezifischem Gewicht der Flüssigkeit der gewünschte Volumenstrom in die Verdampferrohre 2 eingeleitet wird.

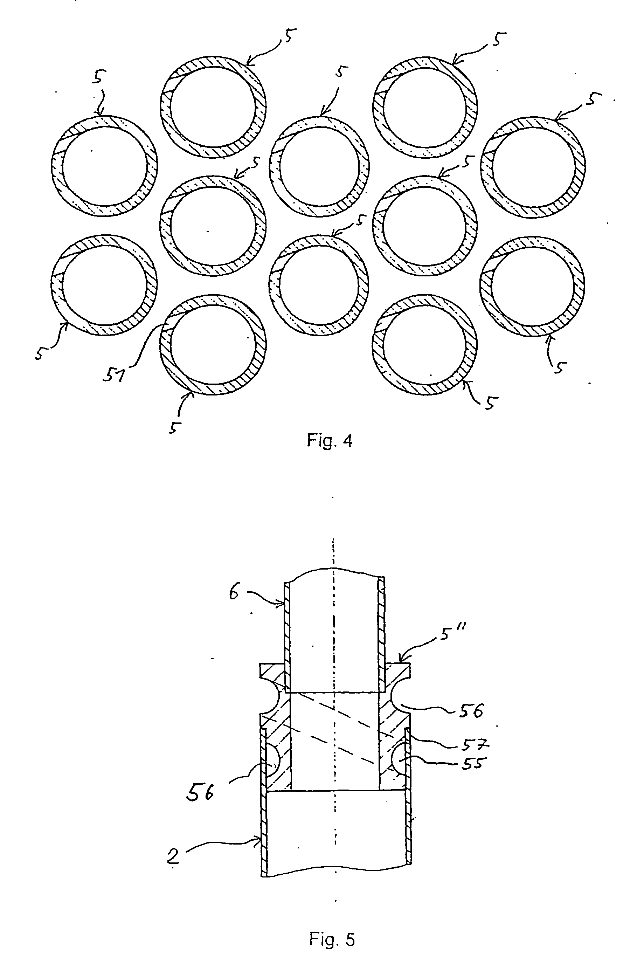

Üblicherweise sind die Verdampferrohre 2 bei der Verwendung von mehr als nur einem Verdampferrohr in engem Abstand voneinander im Rohrboden 3 befestigt. Damit die Eintrittsöffnungen 51 möglichst frei angeströmt werden, sind diese, wie in Fig. 4 für die Einlaufvorrichtungen 5 von einigen benachbarten Verdampferrohren 2 dargestellt ist, so angebracht, daß die Einströmstellen in Richtung der Achse der Eintrittsöffnung 51 möglichst wenig durch Einlaufvorrichtungen 5 benachbarter Verdampferrohre 2 verdeckt werden.

Eine Ausführungsform der Erfindung ist in Fig. 5 dargestellt. Eine Einlaufvorrichtung 5" ist als Rohrstück ausgebildet, welches zwei wendelförmige Einbuchtungen 55 und 56 am Außenumfang aufweist. Die Einbuchtungen 55 und 56 sind ihrerseits im Querschnitt halbkreisförmig ausgebildet, wie Fig. 5 zeigt, wobei die Flüssigkeit durch den im Zusammenwirken mit der Innenumfangswand des Verdampferrohrs 2 ausgebildeten Kanal in den Fallrohrverdampfer 1 geleitet wird. Ferner ist an der Einlaufvorrichtung 5" ein Anschlag 57 ausgebildet, bis zu welchem diese in das Verdampferrohr 2 eingefügt ist. Die Zuführung der Flüssigkeit erfolgt in analoger Weise zur ersten Ausführungsform mittels hydrostatischem Druck.

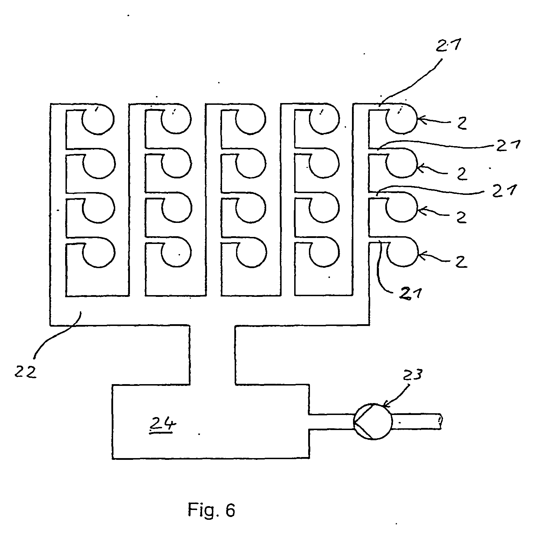

Fig. 6 zeigt eine weitere Ausführungsform, bei der die Zuführung der Flüssigkeit in mehrere Verdampferrohre 2 durch separate Leitungen 21 erfolgt. Diese münden in eine Sammelleitung 22, die mit einem von einer Pumpe 23 versorgten Vorratsbehälter 24 in Verbindung steht. Die Flüssigkeit wird aufgrund der Schwerkraft über die Sammelleitung 22 in die Verdampferrohre 2 geführt.

Allen Ausführungsformen ist gleich, daß die jeweilige Eintrittsöffnung in etwa auf dem gleichen Niveau unter einem Flüssigkeitsspiegel vorliegen. Dann wird in allen Verdampferrohren nahezu der gleiche Flüssigkeitsstrom eingedüst, wobei dies weitgehend unabhängig von geringen Niveauunterschieden der Einströmöffnungen der einzelnen Verdampferrohre relativ zum Rohrboden, einer eventuellen leichten Schieflage des Rohrbodens, unterschiedlichen Strömungsverhältnissen in der Flüssigkeit oberhalb des Rohrbodens aufgrund einem einseitigen Flüssigkeitszulauf sowie einem unterschiedlichen Flüssigkeitspegel oberhalb des Rohrbodens aufgrund eines einseitigen Flüssigkeitszulaufs möglich ist. Dies trifft insbesondere dann zu, wenn die Höhe der Flüssigkeitssäule über den Einströmöffnungen wesentlich größer ist als die Höhenunterschiede zwischen den einzelnen Eintrittsöffnungen, da der Vordruck bei den Einströmöffnungen aller Verdampferrohre dann in etwa gleich groß ist. Damit sind auch die Einströmvolumina bei allen Einströmöffnungen in etwa gleich groß.

Die Erfindung läßt neben den erläuterten Ausführungsbeispielen weitere Gestaltungsansätze zu.

Die Leitungen 21 können, wie in Fig. 6 dargestellt ist, direkt mit den Verdampferrohren 2 oder mit den Eintrittsöffnungen 51 bzw. 53 der Einlaufvorrichtungen verbunden sein.

Da durch die Einlaufvorrichtungen keine Wärme übertragen werden muß, können hier auch Materialien mit einer geringeren Wärmeleitfähigkeit verwendet werden, solange sie weder von den Flüssigkeiten chemisch angegriffen werden noch bei den auftretenden Temperaturen ihre Stabilität verlieren.

Weiter könnte die Einlaufvorrichtung auch mit mehr als zwei Eintrittsöffnungen ausgestattet sein. Hierdurch bildet sich der Fallfilm noch rascher aus. Vorzugsweise wird dabei die einströmende Flüssigkeit an der Rohrinnenwand für alle Eintrittsöffnungen im selben Drehsinn abgelenkt.

Der gewünschte Volumenstrom kann bei kleinen Einströmquerschnitten durch eine große Höhe der über dem oberen Rohrboden anstehenden Flüssigkeit realisiert werden oder mit größeren Einströmquerschnitten und geringeren Flüssigkeitshöhen. Wenn die Gefahr von Ablagerungen besteht, ist es von Vorteil, kleine Einströmquerschnitte und größere Flüssigkeitshöhen zu verwenden, da in diesem Fall wegen der hohen Einströmgeschwindigkeit die Bildung von Ablagerungen an den Einströmstellen erschwert ist. Ferner kann durch geeignete Wahl des Einströmwinkels dem Problem der Schaumbildung der Flüssigkeit beim Einströmen, was der Fallfilmbildung abträglich ist, entgegengewirkt werden.

Weiter ist es bei der Verwendungen von Einlaufvorrichtungen nicht erforderlich, daß die Fallrohre über den oberen Rohrboden 3 hinausragen. Sie können z. B. bündig mit dem oberen Rohrboden verschweißt sein. Dies ist insbesondere dann eine sinnvolle Alternative, wenn Rohre und Rohrboden aus dem gleichen Werkstoff gefertigt sind. Die Dichtung 4 kann dann entfallen. Andererseits ist ein Verschweißen aufgrund der geringen Wandstärke der Verdampferrohre nur unter erschwerten Bedingungen möglich. Ferner bietet die Anordnung von Dichtungen den weiteren Vorteil, daß die Verdampferrohre mit geringerem Aufwand ausgetauscht werden können.

Für die Funktion eines Fallrohrverdampfers ist es erforderlich, daß die verwendeten Werkstoffe chemisch wie physikalisch inert bzw. stabil gegenüber den zu verdampfenden Flüssigkeiten, dem entstehendem Dampf, den verwendeten Temperaturen und dgl. sind. In einer Reihe von Anwendungen hat sich die Materialbeständigkeit als großes Problem herausgestellt. In einer anderen Weiterbildung ist die Einlaufvorrichtung, oder Teile von ihr, aus einem Material gefertigt, das nicht dem Material des Rohres entsprechen muß, den jeweiligen Materialanforderungen entspricht und nicht angegriffen wird. Statt aus metallischen Werkstoffen können die Einlaufvorrichtungen, das Rohransatzstück und das Einsatzstück in vorteilhafter Weise aus unter Berücksichtigung der vorgesehenen Einsatzbedingungen ausgewählten Kunststoffen wie z. B. PP, PVC, PVDF oder PTFE gefertigt sein.

Die erfindungsgemäßen Einlaufvorrichtungen sind für den gesamten Einsatzbereich der Fallrohrverdampfer geeignet. Dazu gehören klare Flüssigkeiten, temperaturempfindliche Flüssigkeiten, korrosive Flüssigkeiten und Emulsionen. Besondere Vorteile weisen die erfindungsgemäßen Einlaufvorrichtungen bei Flüssigkeiten auf, die zur Schaumbildung neigen, da die Fallrohre durch die erfindungsgemäßen Maßnahmen mit schaumfreier Flüssigkeit beaufschlagt werden können. Typische Anwendungsfälle sind daher die Aufkonzentrierung von Fruchtsäften, Milch und Molke, die Abtrennung von Wasser aus Wasser-Öl-Emulsionen oder von freien Fettsäuren aus Ölen, die Aufkonzentrierung saurer oder alkalischer Prozeßflüssigkeiten, sowie die Behandlung von Abwässern und die Meerwasserentsalzung.

## Patentansprüche

1. Fallrohrverdampfer (1), mit einer Mehrzahl an Verdampferrohren (2), auf deren Innenumfangsfläche eine Flüssigkeit aufgrund thermischer Einwirkung verdampft, und mit jeweils einer Einlaufvorrichtung (5") zur Zuführung der Flüssigkeit in das Rohrinnere jedes Verdampferrohrs (2), welche wenigstens eine Eintrittsöffnung (55, 56) aufweist, wobei die Flüssigkeit unter Druckeinwirkung zugeführt wird,
und wobei die wenigstens eine Eintrittsöffnung (55, 56) eine derartige Haupteinströmrichtung der Flüssigkeit in das Rohrinnere herstellt, daß der Hauptauftreffwinkel der eingeleiteten Flüssigkeit weniger als 45° zur Tangentialebene der mittleren Aufschlagstelle der Flüssigkeit auf die innere Umfangsfläche des jeweiligen Verdampferrohrs (2) beträgt,
**dadurch gekennzeichnet, daß**
die Einlaufvorrichtung (5") als in das zugeordnete Verdampferrohr (2) einfügbares Rohrstück mit wenigstens einer als Eintrittsöffnung dienenden, wendelförmigen Einbuchtung (55, 56) am Außenumfang ausgebildet ist.

2. Fallrohrverdampfer nach Anspruch 1, **dadurch gekennzeichnet, daß** die Haupteinströmrichtung der Flüssigkeit in das Rohrinnere im wesentlichen tangential zum Umfang des Rohrinneren ist.

3. Fallrohrverdampfer nach Anspruch 1 oder 2, **dadurch gekennzeichnet, daß** die zu verdampfende Flüssigkeit den Verdampferrohren (2) unter Ausnutzung der Hydrostatik zuführbar ist.

4. Fallrohrverdampfer nach einem der Ansprüche 1 bis 3, **dadurch gekennzeichnet, daß** die zu verdampfende Flüssigkeit den Verdampferrohren (2) über separate Leitungen (21) zuführbar ist.

5. Fallrohrverdampfer nach einem der Ansprüche 1 bis 4, **dadurch gekennzeichnet, daß** die Einlaufvorrichtung (5") am oberen Ende offen ist.

6. Fallrohrverdampfer nach einem der Ansprüche 1 bis 4, **dadurch gekennzeichnet, daß** die Einlaufvorrichtung am oberen Ende geschlossen ist.

7. Einlaufvorrichtung, insbesondere für einen Fallrohrverdampfer (1) nach einem der Ansprüche 1 bis 6, mit wenigstens einer Eintrittsöffnung (55, 56) zur Zuführung von Flüssigkeit in das Rohrinnere eines Verdampferrohrs (2) des Fallrohrverdampfers (1), wobei die Flüssigkeit unter Druckeinwirkung zugeführt wird,
und wobei die wenigstens eine Eintrittsöffnung (55, 56) eine derartige Haupteinströmrichtung der Flüssigkeit in das Rohrinnere herstellt, daß der Hauptauftreffwinkel der eingeleiteten Flüssigkeit weniger als 45° zur Tangentialebene der mittleren Aufschlagstelle der Flüssigkeit auf die innere Umfangsfläche des jeweiligen Verdampferrohrs (2) beträgt,
**dadurch gekennzeichnet, daß**
die Einlaufvorrichtung (5") als in das zugeordnete Verdampferrohr (2) einfügbares Rohrstück mit wenigstens einer als Eintrittsöffnung dienenden, wendelförmigen Einbuchtung (55, 56) am Außenumfang ausgebildet.

8. Einlaufvorrichtung nach Anspruch 7, **dadurch gekennzeichnet, daß** sie mit wenigstens einem der Merkmale der Ansprüche 2 bis 6 weitergebildet ist.

## Claims

1. Downpipe evaporator (1) having a plurality of evaporator pipes (2) on the inner circumferential face of which a liquid evaporates due to thermal effects, and having respectively one inlet device (5") for supplying the liquid into the pipe interior of each evaporator pipe (2), which device has at least one inlet opening (55, 56), the liquid being supplied under the effect of pressure,
and the at least one inlet opening (55, 56) producing a main inflow direction of the liquid into the pipe interior of such a type that the main angle of incidence of the introduced liquid is less than 45° to the tangential plane of the central impingement point of the liquid on the inner circumferential face of the respective evaporator pipe (2),
**characterised in that**
the inlet device (5") is configured as a pipe piece which can be inserted into the assigned evaporator pipe (2) and has at least one spiral-shaped indentation (55, 56) on the outer circumference which serves as inlet opening.

2. Downpipe evaporator according to claim 1, **characterised in that** the main inflow direction of the liquid into the pipe interior is substantially tangential relative to the circumference of the pipe interior.

3. Downpipe evaporator according to claim 1 or 2, **characterised in that** the liquid which is to be evaporated can be supplied to the evaporator pipes (2) using hydrostatics.

4. Downpipe evaporator according to one of the claims 1 to 3, **characterised in that** the liquid which is to be evaporated can be supplied to the evaporator pipes (2) via separate lines (21).

5. Downpipe evaporator according to one of the claims 1 to 4, **characterised in that** the inlet device (5") is open at the upper end.

6. Downpipe evaporator according to one of the claims 1 to 4, **characterised in that** the inlet device is closed at the upper end.

7. Inlet device, in particular for a downpipe evaporator (1) according to one of the claims 1 to 6, having at least one inlet opening (55, 56) for supplying liquid into the pipe interior of an evaporator pipe (2) of the downpipe evaporator (1), the liquid being supplied under the effect of pressure,
and the at least one inlet opening (55, 56) producing a main inflow direction of the liquid into the pipe interior of such a type that the main angle of incidence of the introduced liquid is less than 45° to the tangential plane of the central impingement point of the liquid on the inner circumferential face of the respective evaporator pipe (2),
**characterised in that**
the inlet device (5") is configured as a pipe piece which can be inserted into the assigned evaporator pipe (2) and has at least one spiral-shaped indentation (55, 56) on the outer circumference which serves as inlet opening.

8. Inlet device according to claim 7, **characterised in that** it is developed with at least one of the features of claims 2 to 6.

## Revendications

1. Evaporateur de tuyau de descente (1), avec une pluralité de conduites d'évaporation (2), sur la surface circonférentielle intérieure desquelles un liquide est évaporé par action thermique, et avec un dispositif d'admission (5'') chacune pour la conduction du liquide à l'intérieur de chaque conduite d'évaporation (2), lequel comporte au moins une ouverture d'admission (55, 56), le liquide étant conduit sous pression,
l'ouverture ou les ouvertures d'admission (55, 56) réalisant une direction de courant principal du liquide à l'intérieur de la conduite telle que l'angle d'incidence principal du liquide introduit par rapport au plan tangentiel du point de rencontre moyen du liquide sur la surface circonférentielle intérieure de la conduite d'évaporation (2) correspondante soit inférieur à 45 °,
**caractérisé en ce que**
le dispositif d'admission (5") est formé comme tronçon de conduite insérable dans la conduite d'évaporation (2) associée par au moins un enfoncement (55, 56) hélicoïdal sur la circonférence extérieure, servant d'ouverture d'admission.

2. Evaporateur de tuyau de descente selon la revendication 1, **caractérisé en ce que** la direction du courant principal du liquide à l'intérieur de la conduite est sensiblement tangentielle à la surface intérieure de la conduite.

3. Evaporateur de tuyau de descente selon la revendication 1 ou 2, **caractérisé en ce que** le liquide à évaporer est conductible de manière hydrostatique aux conduites d'évaporation (2).

4. Evaporateur de tuyau de descente selon l'une des revendications 1 à 3, **caractérisé en ce que** le liquide à évaporer est conductible par des tuyaux séparés (21) aux conduites d'évaporateur (2).

5. Evaporateur de tuyau de descente selon l'une des revendications 1 à 4, **caractérisé en ce que** le dispositif d'admission (5") est ouvert à son extrémité supérieure.

6. Evaporateur de tuyau de descente selon l'une des revendications 1 à 4, **caractérisé en ce que** le dispositif d'admission est fermé à son extrémité supérieure.

7. Dispositif d'admission, en particulier pour un évaporateur de tuyau de descente (1) selon l'une des revendications 1 à 6, avec au moins une ouverture d'admission (55, 56) pour la conduction de liquide à l'intérieur d'une conduite d'évaporation (2) de l'évaporateur de tuyau de descente (1), le liquide étant conduit sous pression,
l'ouverture ou les ouvertures d'admission (55, 56) réalisant une direction de courant principal du liquide à l'intérieur de la conduite telle que l'angle d'incidence principal du liquide introduit par rapport au plan tangentiel du point de rencontre moyen du liquide sur la surface circonférentielle intérieure de la conduite d'évaporateur (2) correspondante soit inférieur à 45 °,
**caractérisé en ce que**
le dispositif d'admission (5") est formé comme tronçon de conduite insérable dans la conduite d'évaporateur (2) associée par au moins un enfoncement (55, 56) hélicoïdal sur la circonférence extérieure, servant d'ouverture d'admission.

8. Dispositif d'admission selon la revendication 7, **caractérisé en ce qu'**il est exécuté avec au moins une des caractéristiques des revendications 2 à 6.
